# EUROPEAN PATENT SPECIFICATION

(11) **EP 2 133 626 B1**
(45) Date of publication and mention of the grant of the patent: **23.07.2014**
(21) Application number: 08104332.5
(22) Date of filing: 10.06.2008
(51) Int. Cl.: F21V 29/02, G03B 21/16

(54) **Cooling arrangement for a light source module.**
Kühlanordnung für einen Lichtmodul
Dispositif de refroidissement pour module d'éclairage

(43) Date of publication of application: 16.12.2009
(73) Proprietor: Martin Professional A/S, 8200 Århus N (DK)
(72) Inventor: Bjerre, Flemming Freese, 8000 Århus C (DK)
(74) Representative: Nielsen, Leif

(56) References cited:
- WO-A-2005/095853
- GB-A- 2 068 524
- JP-A- 9 106 076
- JP-A- 2000 352 762
- US-A- 3 806 236

## Description

### Field of the Invention

The present invention relates to a light source module for a light fixture, comprising a light source, which light source is connected through a light source base, which light source module comprises cooling means for cooling the light source and the light source base, which light source module further comprises a dichroic reflector, where at least one heat sink is surrounding the dichroic reflector, which heat sink comprises a number of dishes, which dishes are formed to achieve air gabs there between, which air gabs between the dishes are directed mostly perpendicularly to a centre axis for the light source module, which heat sink forms air gab between the dish formed heat sink and the dichroic reflector, which dish formed heat sink is open towards the air gabs between the dishes.

The present invention relates further to a method for generating an air stream for cooling a light source, by which method the air stream is generated in a radial blower, which blower comprises a rotating fan, where the fan generates an air stream mostly tangential to the rotating fan.

### Background of the Invention

Reducing the pinch temperature of a light source base at least with lamps having a filament is very important. The filament is connected by electric conductive means through the lamp closure and through the lamp base. Increasing temperature leads to an oxidation and corrosion of the electric conductors. This leads to a reduction of the lifetime of the lamp. Therefore, the temperature at the pinch must typically be reduced to a temperature below 450-500 degrees C.

US 5,626,416 describe a lamp module apparatus comprising a reflector where a fan generates an air stream. The air stream surrounds a lamp base before the air stream splits up and continues into a space between an inner reflector and the lamp where another part of the air stream flows between the inner and an outer reflector. Infrared light generated by the lamp passes through the inner reflector towards the outer reflector where infrared light is partly absorbed and partly reflected.

A part of the infrared light that is absorbed in the outer reflector is radiated again at lower frequencies and partly towards the lamp base. Hereby, the lamp base might be heated to a temperature which is so high that it reduces the lifetime of the lamp.

US 5,515,245 describes a light source housing which contains a light source where heat removal is provided by cooling fins and a heat filter supported in the light path, and where a portion of the light is reflected towards the cooling fins.

The cooling fins surround the reflector, but infrared light passes through the reflector, and is absorbed in the cooling fins. At least some of the cooling fins conduct the absorbed heat towards the lamp base, which leads to an increase of the temperature in the lamp base. This can lead to a reduced lifetime of the lamp.

US 2002/0129262 A1 describes a light projector which includes an elliptical reflector, a first spherical retro-reflector, the first retro-reflector having an first aperture formed therein, the first aperture having a first diameter and a first center-point, a second spherical retro-reflector located between the elliptical reflector and the first retro-reflector, the second retro-reflector having a second aperture formed therein, the second aperture having a second diameter and a second center-point, the second diameter smaller than the first diameter, the first and second center-points lying along a common axis, and a light source, the light source located at a foci of the elliptical reflector, the light source lying along the common axis, the elliptical reflector reflecting light emitted by the light source, the reflected light passing through the first and second apertures, the first and second retro-reflectors being positioned so as to reflect light emitted by the light source back towards the light source. Also provided is a light projector that includes a light source projecting a beam of light; and an optical element movable between a first position in which the beam of light does not impinge upon the optical element, a second position in which substantially all of the beam of light impinges upon the optical element, and a plurality of intermediate positions in which a portion of the beam of light impinges upon the optical element, wherein the optical element is comprised of a plurality of radially sectioned sub-elements.

This patent application describes cooling fins, which cooling fins are connected mechanical towards the reflector, and which cooling fins surrounds the reflector. No air gab is present between the reflector and the cooling fins. Thereby no airflow is possible between the reflector and the cooling fins. Only a limited convection air-cooling takes place between the dishes.

DE G 86 20 537.4 describes a lamp which comprises a flexible light conducting material which could be a number of glass fibers which is used for transmitting light from a light source up to where light is to be emitted probably over a table. In this invention, a light source is placed in a kind of cavity formed in a pile of cooling dishes. The form of the cooling dishes shows that a reflector can be placed in the cavity. The reflector probably has a prefixed lamp bulb placed inside the reflector which integrated unit has a base where the lamp connections are pressed into a socket. The whole light source with the reflector and the source are placed in an air stream generated from blowing means which is blowing air along the dishes.

This invention is probably highly efficient for a light source used e.g. at a writing table. But at the writing table, it is probably also critical that the cooling means are operating continuously. This will always lead to noise which will disturb people working at the desk. No attempts are made in the German document in the direction of reducing temperature in the light source base.

WO 2005/095853 relates to a light source module comprising a light source, which light source module comprises cooling means for cooling the light source base, which light source module further comprises a dichroic reflector, where at least one heat sink surrounds the dichroic reflector. The light source module comprises at least a first heat sink, which first heat sink comprises a number of dishes, which dishes are formed to achieve air gabs there between, which dishes comprises at least one opening for the dichroic reflector, which dishes are placed radially around the dichroic reflector, which air gabs between the dishes are directed mostly perpendicularly to a centre axis of the light source module. Hereby, it is achieved that most of the infrared light, which is radiated in the direction of the dichroic reflector is absorbed in the dishes of the heat sink, and because the direction of the dishes is perpendicular to the main axis of the lamp module, the dishes conduct the heat radially towards the outer surface of the dishes.

US 7175317, and US 6578991 concerns a system and method for cooling a bulb of a type, that requires cooling in one part, but not in others. A deflector assembly is coupled through a reflector, to the bulb, to cool only one part.

### Object of the Invention

The object of the invention is to achieve highly effective cooling of a lamp in a light fixture or a projector. A further object of the invention is to cool the electric lamp connection to a temperature lower than the temperature of the light source.

### Description of the Invention

This can be achieved by a light source module as described in the preamble to claim 1 if further modified by at least one forced air stream being generated by a blower system, which blower system is placed in the light fixture housing, which blower system is connected through at least one tubes, which tubes ends in ducts, which ducts direct an air stream in a direction towards the light source, where at least two oppositely directed forced air streams are directed towards the light source base, where that at least two oppositely directed forced air streams are directed towards the light source electric top connection.

By using a tube for the connection between the blowing unit and the actual place where air stream is to be used for cooling, it is possible that the blowing system can be operating in a place where it is possible for the inlet of suction the air into the blowing unit can be placed in a relatively cool place. This leads to the blowing of air with a temperature as low as possible. Especially, if blowing means are placed approximately in the area close to a light source, the temperature of the suction air into a blowing system can be relatively high which will decrease the efficiency of the cooling system. Especially in a light fixture, it can be important that the suction takes place in the front end of the projector because the suction air can result in further cooling of other optical components. This could be e.g. gobos or it could be colour flags used for changing the colour of the light. Suction in these areas will lead to an inlet of outside air into the projector which leads to further cooling of these components. Removing the blowing units forward in a light fixture also leads to a situation where the physical space for placing the blowing units is available. Near the light source, there will most probably be a reflector and there is also a need for a large heat sink close to the light source and close to the projector.

By using the tube, it is possible to direct an air stream directly to where it is to be used. This can lead to a reduction of the total airflow in a light fixture which further can reduce the noise generated by the airflow.

It is preferred that at least one forced air stream is directed towards the light source base. One of the most critical places in a light source for cooling is the light source base. Increasing temperature in the light source base can lead to an oxidation of the electronic connections. An oxidation in the electric lines leading to the inner of the light source will reduce the lifetime of a light source up to 50 %. Therefore, if effective cooling is achieved in the light source base, this alone can lead to a highly increasing lifetime of the light source. Increasing light source lifetime in the light fixture, is rather important because it is rather complicated to change a light source in a light fixture in operation placed high over a stage. Therefore it is important to increase the lifetime of the light source.

It is also preferred that at least one forced air stream is directed towards the light source electric top connection. There are different types of light sources. One widely used light source has electric connections from both ends towards the light source itself. This can lead to a relatively long electric connection which is made through glass in order to keep the connection airtight. But also in light sources having top end bottom electric connections it is important also to cool the top connection of the light source as such.

In a preferred embodiment for the invention at least two oppositely directed forced air streams are directed towards the light source base, where that at least two oppositely directed forced air streams are directed towards the light source electric top connection. By using more oppositely directed forced air streams, it is possible at the places in the light fixture where cooling is to be achieved to generate a turbulent airflow. Blowing at the light source base from at least to different directions will lead to a very turbulent airflow around the light source base. Blowing from different directions towards the top connection of a light source can lead to a turbulent airflow at the top connection, but also turbulent airflow around the light source as such. This can lead to a cooling of the inner of the reflector.

The light source base can be placed in a cavity, which cavity comprises at least two oppositely directed ducts for forced air, which cavity comprises an outlet connected towards the inner of the reflector and the air gab between the dichroic reflector and the dish-shaped heat sink. Blowing air from different directions into a cavity below the reflector will lead to a turbulent flow in that cavity. This cavity will then result in turbulent airflow in the air gap between the reflector and the heat sink. This turbulent flow can lead to a more effective cooling of also the heat sink. This is achieved because the turbulent airflow will probably flow out in the openings in the dish-formed heat sink.

The light source module can comprise at least one heat filter in the light path, which heat filter reflect infrared light towards the heat sink. Hereby is prevented that the light beam contains infra red light, which otherwise could lead to heat generation in further optical components such as gobos or color filters.

The air gabs between the dishes forming the heat sink can comprise a light trap for collecting infrared radiation. It is important that infrared light is collected at the heat sink and not radiated through the heat sink to the outside of the light source. By using the light trap infrared light, will hit the light trap and the only infrared light that is leaving the heat sink is infrared light that has been multiplied reflected at the inner walls of the dishes- These multiplied reflections will reduce the energy content of the infrared light to an acceptable level.

The forced air streams are directed by mostly conical ducts for increasing the velocity of the air stream leaving the ducts. By using conical dots it is possible to increase the velocity of the air and also concentrate the airstream in the direction towards for example the light source socket. If for example two high-speed airstreams are pointing towards the same point around the light source, a turbulent airflow will be generated where the airstreams meet. This turbulent airflow will increase the cooling effect, primarily in the area inside the reflector or in the cavity that is provided around the light source base.

It is preferred that the outlet opening in the radial blower has a reduced opening area for avoid air streaming in a direction towards the wall of an outlet tube, where the outlet tube has an outlet opening mostly with the same open area as the open area of the radial blower, where the tube ends in a duct pointing towards a light source. Herby is the noise generated in the blower. Surprisingly the pressure at the outlet of the blower is increasing.

In another embodiment the light source module can comprise a light source and a light source base, where a heat sink is conducting the heat mostly into radial direction towards the outside of the light source module by a dish formed heat sink, where the dishes are directed mostly perpendicular to the centre axis of the light source module, where the light source module comprises an air gab between the dichroic reflector and the dish formed heat sink, where the said air gab between the dichroic reflector and the dish formed heat sink is open for air flow towards the air gabs between the dishes, where the light source base is placed in a housing, which housing surrounds the light source base, from which housing through an outlet heated air flows towards an air gab between the dichroic reflector and the dish-shaped heat sink, where blowing means generates at least one forced air stream, which blower means generates an air stream from the light fixture housing, which air stream is blown through a tube and a duct in a direction towards the light source. Using tubes and ducts it is possible to direct the airflow directly towards the light source and the light source base where the critical temperature occurs.

In a further embodiment for the invention at least two blowing means are generating air streams, where the speed of the blowing means are regulated by regulation means, where the speed of the blowing means are adjusted independently, where the blowing means are adjusted at least in some time periods to operate at different speed.

By changing the speed of the blowing means, the turbulent airflow generated where airstreams meet will be very different. By changing the speed of the air, the most turbulent volumes inside the reflector or the cavity below the reflector will change all the time and the cooling effect will be increased. By changing the speed of the airstreams it is totally avoided that some areas behind the light source are heated because the local airflow areas are reduced. Changing the speed of the airflow can increase the cooling effect without increasing the power required for cooling.

### Description of the Drawing

Figure 1 shows a light source module 2 seen from the front.
Figure 2 shows a light source module 2 for a light fixture seen from the side.
Figure 3 shows a sectional view of the light source module.
Figure 4 shows a tree dimensional view of a light source module.
Figure 5 shows a sectional view of a blowing unit.
Figure 6 shows a tree dimensional view the same embodiment for a blowing unit.

### Detailed Description of the Invention

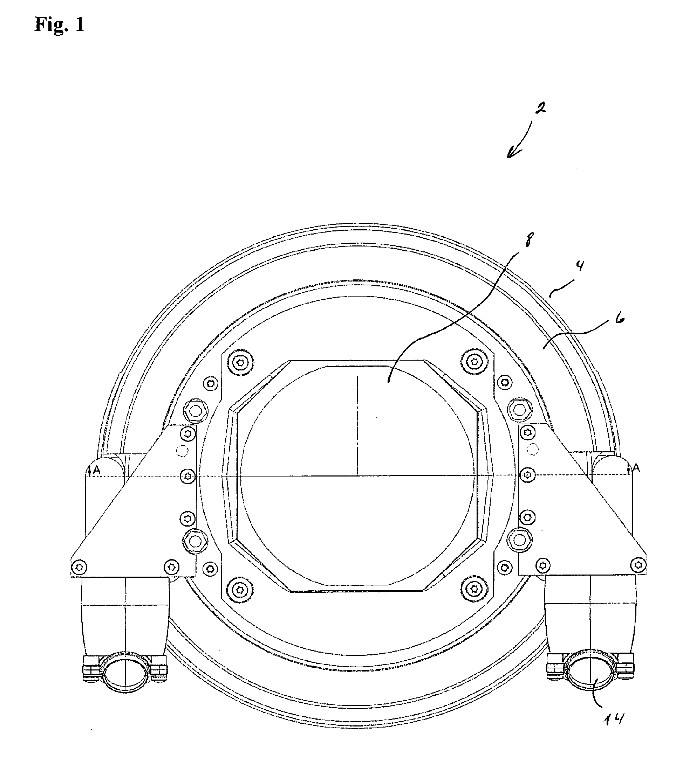

Figure 1 shows a light source module 2 seen from the front. The light source module 2 comprises a housing 4 which has a conical side area 6 and an infrared reflecting optical filter 8. Furthermore, air inlets 14 are indicated.

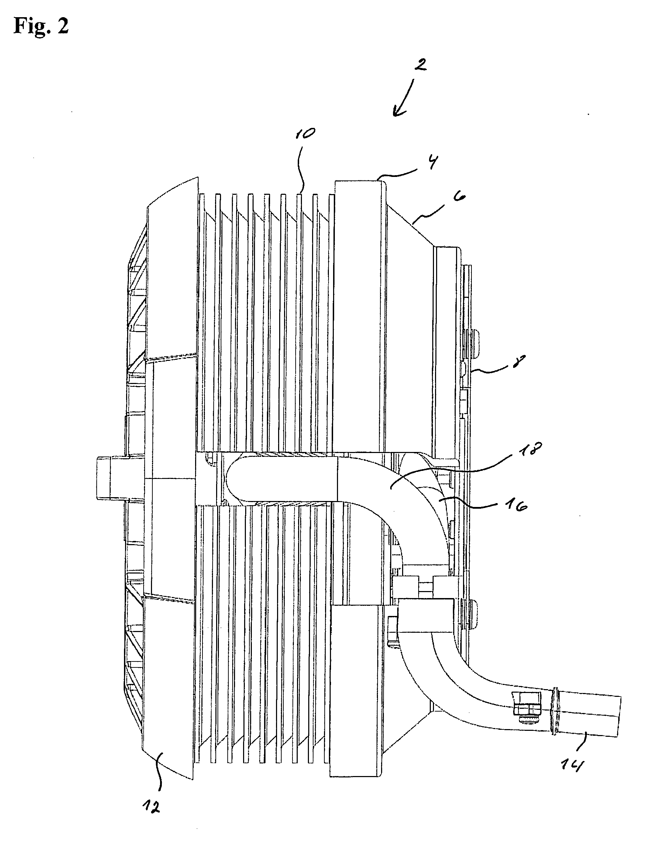

Figure 2 shows a light source module 2 seen from the side for a light fixture. In this figure the housing 4, the conical part 6 and the infrared optical filter 8 are also indicated. Furthermore, dishes 10 and further a housing 12 for the light source base are indicated. Figure 2 further shows the connection tube 14 for air inlet which continues into a manifold that divides into tubes 16 and 18.

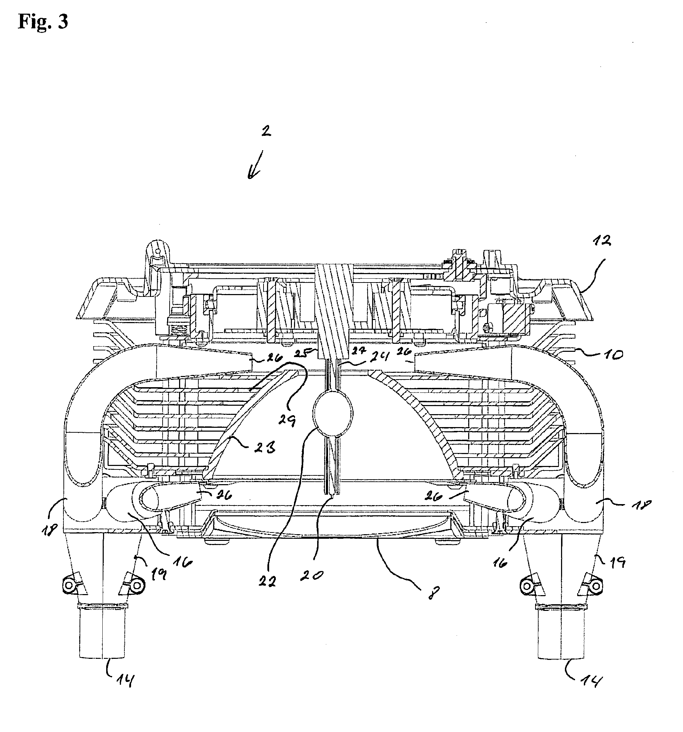

Figure 3 shows a sectional view of the light source module 2. The light source module comprises the same components as previously described, but especially at this figure the infra red filter 8 is indicated. Furthermore is seen the heat sink, the dishes 10 and the housing for the light source base 12. The air inlet 14 is also indicated. These air inlets 14 are connected to a manifold 19 towards the tubes 16 and 18. The light source 22 has a top connection 20 and a connection 24 connected in the light source base 25. The light source base 25 is placed in the cavity 27 in which cavity 27 ducts 26 are indicated. Further ducts 26 are directed towards the top connection 20 of the light source. Between the inner of the dishes 10 and the reflector 23 an opening 29 is indicated.

In operation, air generated from blowing means is streaming through the tubes 14 further through the manifolds 19 into the tubes 16 and 18 and further into the ducts 26. The tube 18 leads to the ducts 26 placed in the cavity 27. In this cavity 27, two airstreams are meeting which result in a turbulent airflow in the cavity 27. This results in very effective cooling at the light source base and also at the light source electrical connection at 24. The air which is flowing into the cavity 27 is leading partly into the room inside the reflector 23 and partly through the opening 29 between the dishes 10 and the reflector 23. In both these ways to the outside, the airflow will be turbulent.

Further, the air that flows to the tubes 16 to the ducts 26 will be directed towards the top connection of the reflector. The air will meet near the top connection 20 and this leads to a turbulent air flow in the inner of the reflector 23. This turbulent flow in the inner of the reflector is further accelerated in its velocity because the air inside the reflector is expanding because the temperature is rapidly increasing of the air. Therefore, a strong airflow is generated outside the inner of the reflector 23. Hereby a highly effective cooling of the light source 22 is achieved.

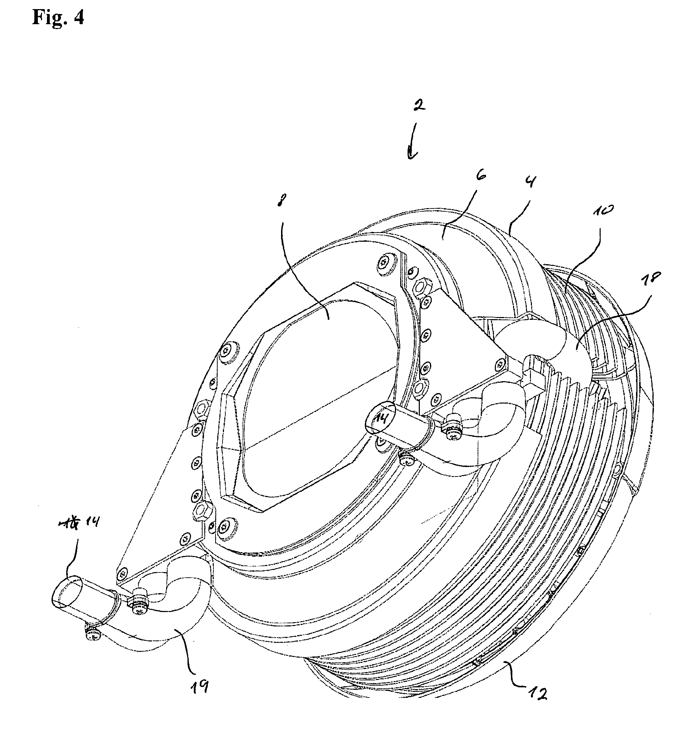

Figure 4 shows a tree dimensional view of a light source module 2 which indicates the same elements as previously mentioned.

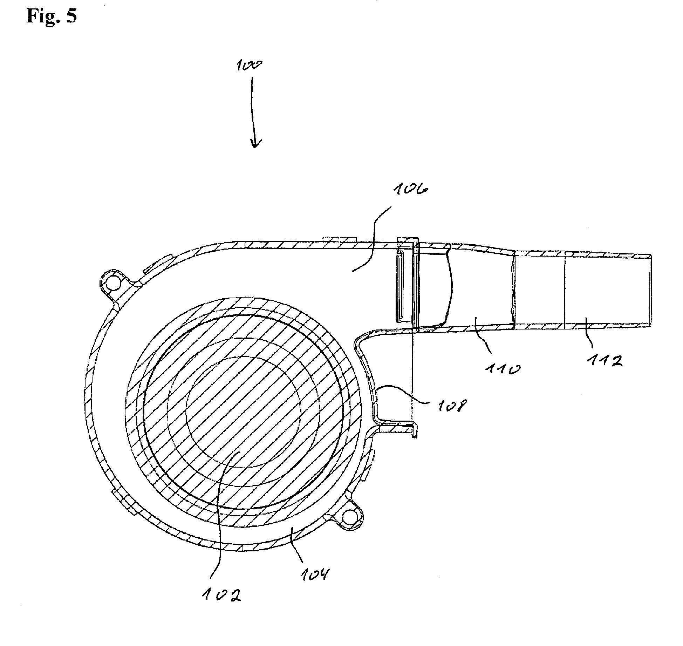

Figure 5 shows a sectional view of a blowing unit 100 comprising a rotating blower 102 placed in a housing 104. An outlet 106 is reduced by an insert 108 which reduces the outlet 106 mostly to the same open area as the duct 110 and duct 112.

Reducing the outlet opening of the radial blower results in that the air that is leaving through the opening 106 is mostly laminar in its flow. This is simply because the air that is leaving the rotating blowing wheel 102 is leaving mostly in a tangential direction. The inset 108 leads to a situation where the air that is flowing through the outlet 106 mostly is in the direction towards the duct 112. This reduces the noise that is generated in the blowing unit 100. But surprisingly, it also results in a much higher pressure at the outlet.

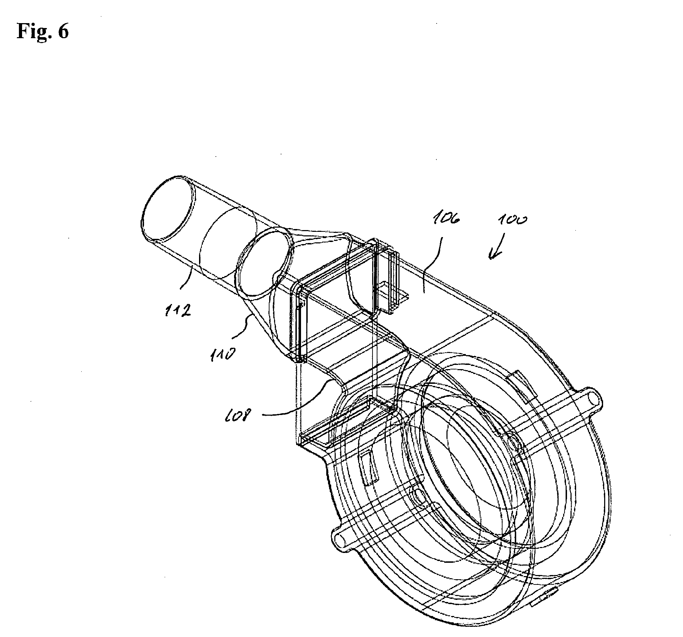

Figure 6 shows a tree dimensional view the same embodiment for a blowing unit 100 as shown in Figure 5, but now shown as an open picture.

## Claims

1. A light source module (2) for a light fixture, comprising a light source (22), which light source (22) is connected through a light source base (25), which light source module (2) comprises cooling means for cooling the light source (22) and the light source base (25), which light source module (2) further comprises a dichroic reflector (23), where at least one heat sink is surrounding the dichroic reflector (23), which heat sink comprises a number of dishes (10), which dishes (10) are forined to achieve air gabs there between, which air gabs between the dishes (10) are directed mostly perpendicularly to a centre axis for the light source module (2), which heat sink forms air gab between the dish formed heat sink and the dichroic reflector (23), which dish formed heat sink is open towards the air gabs between the dishes (10), **characterized in that** at least one forced air streams is generated by a blower system, which blower system is placed in the light fixture housing, which blower system is connected through at least one tube (14,16,18), which tubes (14,16,18) ends in a ducts (26), which ducts (26) direct a air stream in a direction towards the light source (22), where at least two opposite directed forced air streams are directed towards the light source base (25), where at least two oppositely directed forced air streams are directed towards the light source electric top connection (20)..

2. A light source module according to claim 1, **characterized in that** the light source base (25) is placed in a cavity (27), which cavity (27) comprises at least two oppositely directed ducts (26) for forced air, which cavity (27) comprises an outlet connected towards the inner of the reflector (23) and the air gab (29) between the dichroic reflector (23) and the dish-shaped heat sink.

3. A light source module according to claim 1 or 2, **characterized in that** the light source module comprises at least one heat filter (8) in the light path, which heat filter (8) reflect infrared light towards the heat sink.

4. A light source module according to claims 1-3, characterized iiya that the air gabs between the dishes (10) forming the heat sinlc comprises a light trap for collecting infrared radiation.

5. A light source module according to claims 1-4, **characterized in that** the forced air streams are directed by mostly conical ducts for increasing the velocity of the air stream leaving the ducts.

6. Method for cooling a light source module by an air streams where a light source module comprises (2) said light source (22) and a light source base (25), where cooling is performed by a number of steps,
- conducting heat mostly into radial direction towards the outside of the light source module by a dish formed heat sink,
- forming airflow in an air gab (29) between a dichroic reflector (23) and the dish formed heat sink,
- placing the light source base (25) in a housing, which housing surrounds the light source base (25),
- forming an outlet heated air flows towards an air gab (29) between the dichroic reflector and the dish-shaped heat sink,
**characterized in** the following steps
- generating at least a first forced air stream by blowing means (100) through a tube (14,16,18) and a duct (26) in a direction towards the light source (22).
- direct oppositely directed air streams towards the electric connection (20,24) of the light source (22)
- generating a turbulent air flow around the electric connections (22,24) of the light source (22).

7. Method for cooling a light source module by an air stream according to claim 6, **characterized in that** at least two blowing means are generating air streams, where the speed of the blowing means are regulated by regulation means, where the speed of the blowing means are adjusted independently, where the blowing means are adjusted at least in some time periods to operate at different speed.

## Patentansprüche

1. Lichtquellenmodul (2) für einen Beleuchtungskörper, umfassend eine Lichtquelle (22), die mittels einer Lichtquellenbasis (25) befestigt ist, wobei das Lichtquellenmodul (2) Kühlanordnungen zum Kühlen der Lichtquelle (22) und der Lichtquellenbasis (25) aufweist, wobei das Lichtquellenmodul (2) ferner einen dichroitischen Reflektor (23) umfasst, wobei wenigstens ein Kühlkörper den dichroitischen Reflektor (23) umschliesst, wobei der Kühlkörper eine Vielzahl von Blechen (10) aufweist, die für die Gestaltung von Luftspalten zwischen sich vorgesehen sind, wobei die Luftspalten zwischen den Blechen (10) sich hauptsächlich senkrecht zu der Mitterachse des Lichtquellenmoduls (2) erstrecken, wobei der Kühlkörper eine Luftspalte zwischen dem blechförmigen Kühlkörper und dem dichroitischen Reflektor (23) bildet, wobei der blechförmige Kühlkörper gegen die Luftspalten zwischen den Blechen (10) offen ist, **dadurch gekennzeichnet, dass** wenigstens ein Zwangsluftstrom durch ein Gebläsesystem erzeugt wird, wobei das Gebläsesystem im Beleuchtungskörpergehäuse angeordnet ist und durch wenigstens ein Rohr (14, 16, 18) verbunden ist, wobei die Röhre (14, 16, 18) in einen Kanal (26) enden, wobei der Kanal (26) einen Luftstrom in einer Richtung gegen die Lichtquelle (22) richtet, wobei wenigstens zwei gegeneinander gerichtete Zwangsluftströme gegen die Lichquellenbasis (25) gerichtet sind, wobei wenigstens zwei gegeneinander gerichtete Zwangsluftströme gegen den elektrischen oberen Anschluss (20) der Lichtquelle gerichtet sind.

2. Lichtquellenmodul nach Anspruch 1, **dadurch gekennzeichnet, dass** die Lichtquellenbasis (25) in einem Hohlraum (27) angeordnet ist, der wenigstens zwei gegeneinander gerichtete Rohrleitungen (26) für Zwangsluft aufweist, wobei der Hohlraum (27) einen gegen das Reflektorinnere (23) und die Luftspalte (29) zwischen dem dichroitischen Reflektor (23) und dem blechförmigen Kühlkörper verbundenen Auslass aufweist.

3. Lichtquellenmodul nach Anspruch 1 oder 2, **dadurch gekennzeichnet, dass** das Lichtquellenmodul wenigstens ein Wärmefilter (8) in der Lichtstrecke aufweist, wobei das Wärmefilter (8) infrarotes Licht gegen den Kühlkörper reflektiert.

4. Lichtquellenmodul nach Anspruch 1-3, **dadurch gekennzeichnet, dass** die Luftspalten zwischen den Blechen (10), die die Kühlkörper bilden, eine Lichtfalle zur Aufnahme von infraroter Strahlung aufweisen.

5. Lichtquellenmodul nach Anspruch 1-4, **dadurch gekennzeichnet, dass** die Zwangsluftströme durch hauptsächlich konische Kanäle zur Beschleunigung der Geschwindigkeit des aus den Kanälen tretenden Luftstromes gesteuert werden.

6. Verfahren zum Kühlen eines Lichtquellenmoduls durch Luftströme, wobei ein Lichtquellenmodul (2) die erwähnte Lichtquelle (22) und eine Lichtquellenbasis (25) umfasst, wobei das Kühlen durch eine Vielzahl von Schritten unternommen wird, wobei
- die Wärme hauptsächlich in die radiale Richtung gegen das Äußere des Lichtquellenmoduls durch einen blechförmigen Kühlkörper geleitet wird,
- ein Luftstrom in eine Luftspalte (29) zwischen einem dichroitischen Reflektor (23) und dem blechförmigen Kühlkörper gebildet wird,
- die Lichtquellenbasis (25) in ein die Lichtquellenbasis (25) einschließendes Gehäuse angeordnet wird,
- ein erwärmter Luftstrom gegen eine Luftspalte (29) zwischen dem dichroitischen Reflektor und dem blechförmigen Kühlkörper gebildet wird,
**gekennzeichnet durch** die folgenden Verfahrensschritte:
- **durch** Gebläsevorrichtungen (100) Erzeugen von wenigstens einem ersten Zwangsluftstrom **durch** ein Rohr (14, 16 18) und einen Kanal (26) in einer Richtung gegen die Lichtquelle (22),
- direkt gegeneinander gerichtete Luftströme gegen die elektrische Verbindung (20, 24) der Lichtquelle (22),
- Erzeugen eines turbulenten Luftstromes um die elektrischen Verbindungen (22, 24) der Lichtquelle (22) herum.

7. Verfahren zum Kühlen eines Lichtquellenmoduls durch einen Luftstrom nach Anspruch 6, **dadurch gekennzeichnet, dass** wenigstens zwei Gebläsevorrichtungen Luftströme erzeugen, wobei die Geschwindigkeit der Gebläsevorrichtungen durch Regelvorrichtungen geregelt wird, wobei die Geschwindigkeit der Gebläsevorrichtungen unabhängig geregelt wird, wobei die Gebläsevorrichtungen wenigstens während einiger Zeiträume zum Betrieb bei unterschiedlichen Geschwindigkeiten angepasst werden.

## Revendications

1. Module de source de lumière (2) pour un appareil d'éclairage, comprenant une source de lumière (22), ladite source de lumière (22) est connectée par l'intermédiaire d'un base de source de lumière (25), ledit module de source de lumière (2) comprend des moyens de refroidissement pour refroidir la source de lumière (22) et le base de source de lumière (25), ledit module de source de lumière (2) comprend en outre un réflecteur dichroïque (23), où au moins un dissipateur de chaleur entoure le réflecteur dichroïque (23), ledit dissipateur de chaleur comprend un nombre de coupelles (10), lesdites coupelles (10) sont formées de manière à obtenir des espaces d'air entre celles-ci, lesdits espaces d'air entre les coupelles (10) sont dirigés principalement perpendiculairement à un axe central du module de source de lumière (2), ledit dissipateur de chaleur forme l'espace d'air entre le dissipateur de chaleur formé en coupelles et le réflecteur dichroïque (23), ledit dissipateur de chaleur formé en coupelles est ouvert vers les espaces d'air entre les coupelles (10), **caractérisé en ce qu'**au moins un flux d'air forcé est généré par un système de soufflage, ledit système de soufflage est placé dans le boîtier de l'appareil d'éclairage, ledit système de soufflage est relié à travers au moins un tube (14,16,18), lesdits tubes (14,16,18) débouchent dans un conduit (26), ledit conduit (26) dirige un flux d'air dans une direction vers la source de lumière (22), où au moins deux flux d'air forcés dirigés de sens inverse sont dirigés vers le base de source de lumière (25), où au moins deux flux d'air forcés dirigés de sens inverse sont dirigés vers la connexion supérieure électrique de la source de lumière (20).

2. Module de source de lumière selon la revendication 1, **caractérisé en ce que** le base de source de lumière (25) est placé dans une cavité (27), ladite cavité (27) comprend au moins deux conduits dirigés dans des directions opposées (26) pour air forcé, ladite cavité (27) comprend un orifice de sortie relié en direction de l'intérieur du réflecteur (23) et de l'espace d'air (29) entre le réflecteur dichroïque (23) et le dissipateur de chaleur formé en coupelles.

3. Module de source de lumière selon la revendication 1 ou 2, **caractérisé en ce que** le module de source de lumière comprend au moins un filtre de chaleur (8) dans le trajet de lumière, ledit filtre de chaleur (8) réfléchit la lumière infrarouge vers le dissipateur de chaleur.

4. Module de source de lumière selon les revendications 1 -3, **caractérisé en ce que** l'espace d'air entre les coupelles (10) formant le dissipateur de chaleur comprend un piège à lumière pour collecter un rayonnement infrarouge.

5. Module de source de lumière selon les revendications 1 -4, **caractérisé en ce que** les flux d'air forcés sont dirigés par des conduits principalement coniques pour augmenter la vitesse du flux d'air quittant les conduits.

6. Procédé de refroidissement d'un module de source de lumière par un flux d'air dans lequel un module de source de lumière comprend (2) ladite source de lumière (22) et un base de source de lumière (25), où le refroidissement est effectué par un certain nombre d'étapes,
- conduire la chaleur principalement dans le sens radial en direction de l'extérieur du module de source de lumière par un dissipateur de chaleur formé en coupelles,
- former un flux d'air dans un espace d'air (29) entre un réflecteur dichroïque (23) et le dissipateur de chaleur formé en coupelles,
- placer le base de la source de lumière (25) dans un boîtier, ledit boîtier entoure le base de source de lumière (25),
- former un flux d"air chauffé de sortie vers un espace d'air (29) entre le réflecteur dichroïque et le dissipateur de chaleur formé en coupelles,
**caractérisé en ce qu'**il comporte les étapes suivantes
- générer au moins un premier flux d'air forcé par des moyens de soufflage (100) à travers un tube (14, 16, 18) et un conduit (26) dans une direction vers la source de lumière (22)
- diriger des flux d'air dirigés de sens inverse vers la connexion électrique (20,24) de la source de lumière (22)
- générer un flux d'air turbulent autour de la connexion électrique (22,24) de la source de lumière (22).

7. Procédé de refroidissement d'un module de source de lumière par un flux d'air selon la revendication 6, **caractérisé en ce qu'**au moins deux moyens de soufflage sont génératrices des flux d'air, où la vitesse des moyens de soufflage est régulée par des moyens de régulation, où la vitesse des moyens de soufflage est réglée indépendamment, où les moyens de soufflage sont ajustés au moins dans certaines périodes de temps à fonctionner à une vitesse différente.
